# EUROPEAN PATENT APPLICATION

(11) **EP 4 729 358 A1**
(43) Date of publication of application: **22.04.2026**
(21) Application number: 24207426.8
(22) Date of filing: 18.10.2024
(51) Int. Cl.: B60N 3/10

(54) **CUP HOLDER ADAPTOR FOR IMPROVING THE USAGE/FUNCTIONALITY OF CUP HOLDERS WITH CANS AND OTHER CYLINDRICALLY SHAPED OBJECTS**

(71) Applicant: Wilson, Adam, 53902 Bad Münstereifel (DE)
(72) Inventor: Wilson, Adam, 53902 Bad Münstereifel (DE)
(74) Representative: dompatent

(57) **Abstract**

Cup holder adaptor (1) for holding a can (22), the cup holder adaptor (1) comprising a base body (2) and slats projecting from this base body (2), which provides that the base body (2) in a used form (24) has a cylindrical shape and the first slats (4) are connected in the longitudinal direction (6) to the cylindrical base body and project inwards into the cylinder, wherein the first slats (4) are flexible in the direction of the base body (2), and in that second slats (10) are provided which project from the outside (14) of the base body (2) and are also flexible in the direction of the base body (2).

## Description

The invention relates to a cup holder adaptor according to the general term of claim 1.

In the field of beverage container accessories, it is common to use cup holders to secure cans, bottles, and other drink containers. Known systems typically involve rigid or semi-rigid structures designed to hold a beverage container in place, often within a vehicle or on a stationary surface. These conventional cup holders are generally constructed from materials such as plastic or metal and feature a fixed shape that is intended to accommodate a range of container sizes. Despite their widespread use, these traditional cup holders often present several limitations.

One common issue with existing cup holders is their lack of adaptability to different container sizes and shapes. Many cup holders are designed with a fixed diameter, which can lead to instability when holding containers that are either too small or too large for the holder. This can result in spills or the container tipping over, particularly when the vehicle is in motion or when the holder is subjected to sudden movements. Additionally, the rigid nature of these holders can make them cumbersome to store or transport when not in use, as they occupy a fixed amount of space.

Another challenge with conventional cup holders is their inability to provide a secure grip on the container. Many designs rely on friction or gravity to keep the container in place, which may not be sufficient to prevent slippage, especially with smooth or wet surfaces. Some designs incorporate flexible elements, such as rubber grips or adjustable arms, but these can wear out over time or fail to provide consistent performance. Furthermore, cup holders that are integrated into vehicles or furniture often lack the flexibility to be easily repositioned or removed, limiting their versatility.

Despite the substantial advances in the field of beverage container accessories, there remains a need for a cup holder that can securely hold a variety of container sizes and shapes while being adaptable, easy to store, and capable of providing a reliable grip under various conditions.

It is an object of this invention to provide a cup holder adaptor that overcomes one or more of the disadvantages of known systems.

The features of claim 1 serve to solve this problem.

According to an embodiment, the subject matter pertains to a cup holder adaptor designed to securely hold a can or a bottle or another cylindrically shaped object. When 'can' is mentioned in the description and the claims, it can also refer to a bottle or a cylindrically shaped object. The cup holder adaptor includes a base body and slats that extend from this base body. The base body, when in use, takes on a cylindrical shape. The first set of slats are connected longitudinally to the cylindrical base body and extend inward into the cylinder. These first slats are flexible towards the base body. Additionally, there are second slats that extend from the outside of the base body and are also flexible towards the base body.

The term "base body" refers to the main structure of the cup holder adaptor, which supports the slats. The "cylindrical shape" indicates that the base body forms a circular structure when in use, which is ideal for holding cylindrical objects like cans. "Slats" are elongated, flat pieces that project from the base body. The "first slats" are those that extend inward, providing a gripping mechanism inside the cylinder to hold the can securely. Their flexibility allows them to adapt to different can sizes and provide a snug fit. The "second slats" extend outward from the base body and are also flexible, which can help in providing additional stability and grip when the cup holder adaptor is placed in a larger container or holder.

The advantages of this design include enhanced adaptability to various can sizes due to the flexible slats, improved grip and stability both inside and outside the cup holder adaptor, and a secure holding mechanism that prevents the can from moving or tipping over. This makes the cup holder adaptor versatile and reliable for different usage scenarios.

According to an embodiment, the cup holder adaptor is characterized by a base body that has an elongated flat shape in a second, unused form. This base body is flexible and can be rotated into a cylindrical shape when in the first, used form. The first slats are arranged inside this cylindrical shape and project from the base body. The specific mechanisms of communication between components in this embodiment involve the transformation of the base body from an elongated flat shape to a cylindrical shape. This transformation is facilitated by the inherent flexibility of the base body, which allows it to be rotated and reshaped. The first slats, which are connected to the base body in the longitudinal direction, are designed to project inward into the cylinder when the base body is in its cylindrical form. This inward projection of the first slats provides a secure grip on a can placed within the cup holder adaptor. Additionally, the flexibility of the first slats in the direction of the base body ensures that they can adapt to the contour of the can, enhancing the stability and security of the hold. The second slats, which project from the outside of the base body, are also flexible in the direction of the base body. This dual flexibility of both the first and second slats in relation to the base body allows for a dynamic and adaptable holding mechanism that can accommodate various sizes and shapes of cans. The new feature introduced by this embodiment is the dual-form flexibility of the base body, which not only allows for compact storage when in the elongated flat shape but also provides a robust and adaptable holding mechanism when transformed into the cylindrical shape. This dual-form flexibility enhances the versatility and functionality of the cup holder adaptor, making it suitable for a wide range of applications and environments. The ability to switch between an unused flat form and a used cylindrical form adds a layer of convenience and practicality, as the cup holder adaptor can be easily stored when not in use and quickly deployed when needed. This embodiment thus brings a significant improvement in terms of both usability and functionality, addressing common issues related to storage and adaptability in cup holder adaptors.

However, it is also possible to provide an embodiment in which the cup holder adaptor only has the used form and cannot be converted into an unused form.

According to an embodiment, the cup holder adaptor comprises a base body and slats projecting from this base body, where the base body in a used form has a cylindrical shape and the first slats are connected in the longitudinal direction to the cylindrical base body and project inwards into the cylinder, with the first slats being flexible in the direction of the base body. Additionally, second slats are provided which project from the outside of the base body and are also flexible in the direction of the base body. In this specific embodiment, the base body overlaps in the first, used form. The overlap of the base body introduces a new mechanism of communication between the components by allowing the base body to adjust its circumference. This means that the outer diameter can be flexibly adjusted and the cup holder adaptor can be flexibly inserted into different holding devices.

According to an embodiment, the cup holder adaptor for holding a can comprises a specific mechanism of communication between the components by specifying that in the used form, the second slats are connected in the longitudinal direction to the cylindrical base body. This feature brings several new advantages and functionalities to the cup holder adaptor. By connecting the second slats in the longitudinal direction to the cylindrical base body, the structural integrity and stability of the cup holder adaptor are enhanced. This longitudinal connection ensures that the second slats are securely anchored to the base body, reducing the likelihood of detachment or misalignment during use. Additionally, the longitudinal orientation of the second slats allows for a more uniform distribution of forces when a can is inserted into the cup holder adaptor, thereby providing better support and grip. This configuration also facilitates the flexibility of the second slats in the direction of the base body, enabling them to adapt to various can sizes and shapes while maintaining a firm hold.

According to an embodiment, the cup holder adaptor for holding a can comprises that the first slats protrude at an angle of less than 90 degrees from the inside of the base body. This angular orientation of the first slats introduces a new feature that enhances the functionality and adaptability of the cup holder adaptor. By protruding at an angle of less than 90 degrees, the first slats can provide a more secure and snug fit for the can within the cylindrical base body. This angled protrusion allows the slats to exert a consistent inward pressure on the can, thereby stabilizing it and preventing it from wobbling or tipping over. The flexibility of the slats in the direction of the base body ensures that they can accommodate cans of varying diameters while maintaining a firm grip. This design feature also facilitates easy insertion and removal of the can, as the slats can flex outward when the can is inserted and then return to their angled position to hold the can securely. Furthermore, the angled slats can help distribute the pressure more evenly around the circumference of the can, reducing the risk of deformation or damage to the can. This embodiment thus provides a practical and efficient solution for securely holding a can within a cup holder, enhancing both the stability and versatility of the device. The combination of the cylindrical base body, flexible slats, and the specific angular orientation of the first slats creates a robust and adaptable cup holder adaptor suitable for various applications.

According to an embodiment, the cup holder adaptor includes second slats that protrude on the outside of the base body at an angle of less than 90 degrees. This specific angular orientation of the second slats introduces several functional and structural advantages to the cup holder adaptor. Firstly, the angled protrusion of the second slats enhances the stability of the cup holder adaptor when it is placed within a vehicle's cup holder compartment or any other holding area. The less-than-90-degree angle allows the slats to create a more secure grip against the walls of the compartment, preventing unwanted movement or tilting of the cup holder adaptor, especially during vehicle motion. This feature ensures that the object within the holder remains upright and steady, reducing the risk of spills. Additionally, the angled second slats contribute to the overall flexibility and adaptability of the cup holder adaptor. By projecting at an angle, these slats can better conform to the varying shapes and sizes of different cup holder compartments, providing a more universal fit. This adaptability is particularly beneficial in automotive applications where cup holder dimensions can vary significantly between different vehicle models. Furthermore, the angled orientation of the second slats not only facilitates easy insertion of the cup holder adapter into the compartment but also helps prevent the 'unintentional' removal of the cup holder adapter from the compartment whilst removing the can/object held within. The slats can flex and adjust more readily as the cup holder adaptor is pushed into or pulled out of the compartment, reducing the effort required by the user and minimizing wear and tear on both the cup holder adaptor and the compartment.

According to an embodiment, the cup holder adaptor features a design where the first slats are longer than the second slats, which introduces a specific mechanism of communication between the components of the cup holder adaptor. The first slats, which are connected longitudinally to the cylindrical base body and project inward into the cylinder, are flexible in the direction of the base body. This flexibility allows the first slats to adapt to the shape and size of the can being held, providing a secure grip. The second slats, which project from the outside of the base body and are also flexible in the direction of the base body, contribute to the overall stability and adaptability of the cup holder adaptor. By making the first slats longer than the second slats, the design ensures that the primary gripping mechanism is more pronounced on the inside of the cylindrical base body, where the can is directly held. This length difference allows the first slats to extend further into the cylinder, offering a more substantial and adjustable grip on the can, which can accommodate various can sizes and shapes more effectively. The second slats, being shorter, provide additional support and flexibility from the outside, ensuring that the base body can adapt to different environments or mounting surfaces without compromising the grip on the can.

According to an embodiment, the cylindrical shape of the cup holder adaptor can be inserted into a cup holder. The insertion mechanism implies a compatibility in dimensions and flexibility that allows the cup holder adaptor to fit snugly within another already known cup holder.

According to an embodiment, the cup holder adaptor is further enhanced by the inclusion of second slats that comprise tooth-like projections over their entire length. This specific mechanism introduces a new feature that significantly improves the functionality and versatility of the cup holder adaptor. The tooth-like projections on the second slats provide grip and stability when the cup holder adaptor is in use and placed in a holding device which can be a cup holder. These projections interact with the surface of the holding device, ensuring that the cup holder adaptor is securely held within the holding device, even when a can is pulled out of the cup holder adaptor.

According to an embodiment, the cup holder adaptor features first slats that are inclined, preferably rounded, at least at their respective first ends. This inclination and rounding of the first slats introduce several specific mechanisms of communication between the components of the cup holder adaptor. The first slats, which are connected longitudinally to the cylindrical base body and project inward into the cylinder, are designed to be flexible in the direction of the base body. The inclination and rounding at the first ends of these slats enhance their ability to conform to the shape of the can being held, thereby providing a more secure and snug fit. This design feature allows the slats to better accommodate variations in the size and shape of different cans, ensuring that the can is held firmly in place regardless of minor discrepancies in its dimensions. The flexibility of the slats, combined with their inclined and rounded ends, also facilitates easier insertion and removal of the can. Additionally, the inclined and rounded ends of the first slats help that the first slats are not in the way of the can/object being held at the base/bottom most surface of the can/object, thereby enabling full insertion.

According to an embodiment, the cup holder adaptor may comprise the inclination and rounding of the second ends of the first slats.

In the following, with reference to the drawings, embodiments of the invention are explained in more detail.

It shows schematically:
Figure 1: shows an embodiment of a cup holder adaptor in its cylindrical, used form with slats projecting inward and outward from the base body.
Figure 2: shows an embodiment of a cup holder adaptor in its cylindrical, used form with first and second slats projecting inward and outward respectively.
Figure 3: shows an embodiment of the cup holder adaptor with inclined or rounded ends of the first slats.
Figure 4: shows an embodiment of a cup holder adaptor in and exploded view.
Figure 5: shows another embodiment of a cup holder adaptor in an assembled view.
Figure 6: shows an embodiment of a cup holder adaptor in an elongated flat shape with first slats projecting inward from the base body.
Figure 7: shows an embodiment of a cup holder adaptor in an elongated flat shape with second slats projecting outward from the base body.
Figure 8: shows an illustrative top view of a cup holder adaptor with both first and second slats projecting from the base body.
Figure 9: shows an embodiment of a cup holder adaptor in an unused form and a dual cup holder tray.
Figure 10: shows an embodiment of a cup holder adaptor in a cylindrical shape not yet inserted into a cup holder.
Figure 11: shows an embodiment of a cup holder adaptor in a cylindrical shape inserted into a cup holder.
Figure 12: shows an embodiment of a cup holder adaptor in the top view.

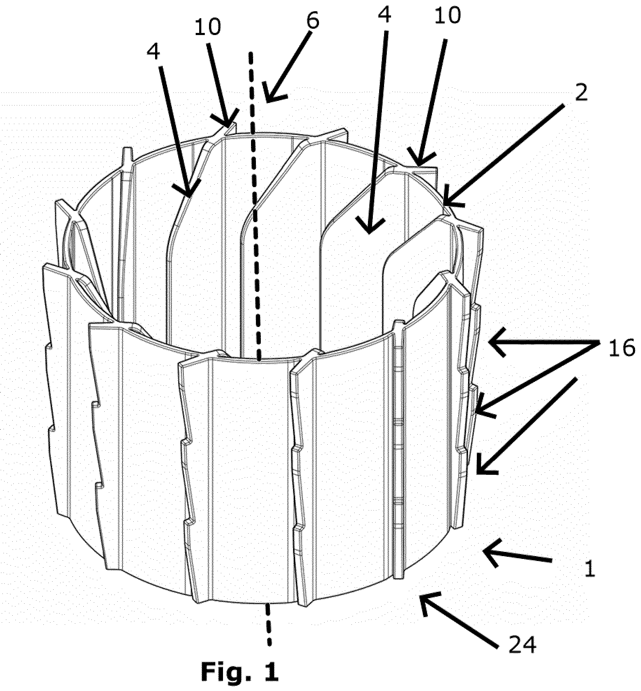

Figure 1 illustrates a cup holder adaptor 1 designed to hold a can 22 or a bottle or another cylindrically shaped object. When 'can' is mentioned in the description and the claims, it can also refer to a bottle or a cylindrically shaped object. The cup holder adaptor 1 comprises a base body 2 and slats projecting from this base body 2. The base body 2, in its used form 24, exhibits a cylindrical shape. The embodiment shown in figure 1 is an embodiment, in which the cup holder adaptor only has the used form and cannot be converted into an unused form.

First slats 4 are connected in the longitudinal direction 6 to the cylindrical base body 2 and project inward into the cylinder. These first slats 4 are flexible in the direction of the base body 2.

Additionally, second slats 10 are provided, which project from the outside 14 of the base body 2 and are also flexible in the direction of the base body 2. The second slats 10 feature tooth-like projections 16 along their entire length. The first slats 4 and second slats 10 are arranged in such a manner that they provide structural integrity and flexibility to the cup holder adaptor 1.

The cylindrical shape of the base body 2 allows for the insertion of a can 22, with the first slats 4 providing an inward grip to hold the can securely. The second slats 10, projecting outward, add to the structural stability and flexibility of the cup holder adaptor 1. The longitudinal direction 6 of the slats ensures that the cup holder adaptor 1 provide grip/reactionary force against the cup holder to ensure the cup holder adaptor is securely positioned and retained.

The figure also shows that the first slats 4 protrude at an angle of less than 90° from the inside 8 of the base body 2, while the second slats 10 protrude at an angle of less than 90° from the outside 14 of the base body 2. This angular projection of the slats enhances the grip and stability of the cup holder adaptor 1 when in use. The first slats 4 are longer than the second slats 10.

Overall, Figure 1 depicts the detailed structure and components of the cup holder adaptor 1, showcasing its flexibility, structural integrity, and functional design for holding a can 22 securely.

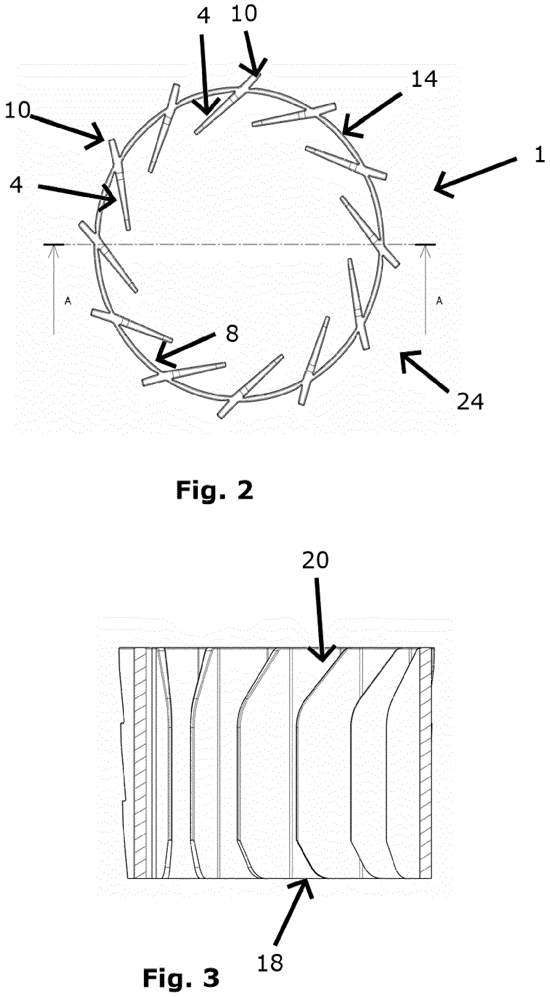

Figure 2 illustrates a top view of the cup holder adaptor 1 of Figure 1 in its cylindrical, used form 24. The base body 2 forms a cylindrical shape, with first slats 4 projecting inward into the cylinder. These first slats 4 are connected longitudinally to the base body 2 and are flexible in the direction of the base body 2. The first slats 4 protrude at an angle of less than 90° from the inside 8 of the base body 2. Additionally, second slats 10 are shown projecting from the outside 14 of the base body 2. These second slats 10 are also flexible in the direction of the base body 2 and protrude at an angle of less than 90° from the outside 14 of the base body 2. The cylindrical shape 24 is defined by the arrangement of the base body 2 and the slats 4 and 10.

Figure 3 provides a sectional view of A:A as shown in Figure 2 of the cup holder adaptor 1 of Figure 2, focusing on the first slats 4. The first ends 18 and the second ends 20 of the first slats 4 are shown to be inclined and preferably rounded. This inclination and rounding at both ends of the first slats 4 enhance the flexibility and functionality of the slats within the cylindrical shape 24. The figure emphasizes the structural design of the slats to ensure they can securely hold a can 22 within the cup holder adaptor 1 while allowing for easy insertion and removal.

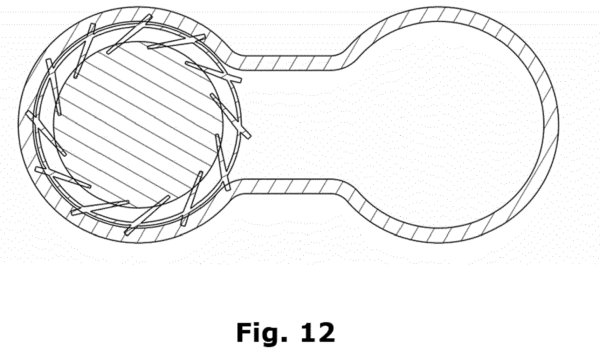

The combination of the inward-projecting first slats 4 and the outward-projecting second slats 10, both being flexible, provides a secure grip on the can 22 while also allowing the cup holder adaptor 1 to be inserted into a cup holder 28. The tooth-like projections 16 on the second slats 10, further enhance the grip and stability of the cup holder adaptor 1. These tooth-like projections can be seen in Figure 12.

In summary, Figures 2 and 3 illustrate the structural and functional aspects of the cup holder adaptor 1, highlighting the arrangement and design of the first slats 4 and second slats 10, and their interaction with the cylindrical base body 2.

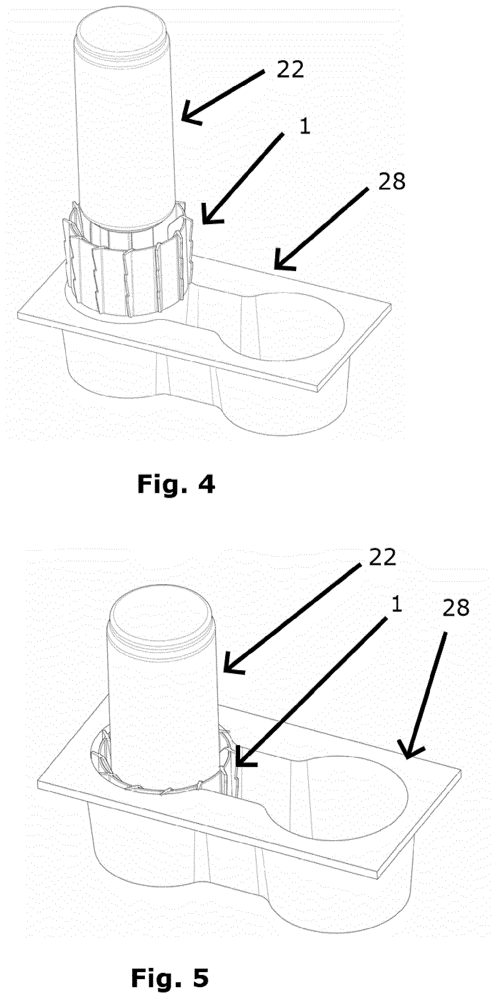

Figures 4 and 5 illustrate the cup holder adaptor 1 of Figures 1-3 in its operational context, demonstrating its interaction with a can 22 and a cup holder 28, such as that found in a vehicle.

Figure 4 is an exploded view and none of the components are yet inserted or securely holding each other. Figure 4 shows the intended assembly sequence to insert the cup holder adaptor into a cup holder of a vehicle or similar, and then insert a can/object. In Figure 4, the cup holder adaptor 1 is shown in its cylindrical, used form. The cup holder adaptor 1 can be inserted into a cup holder 28, which can be part of a larger assembly, possibly a vehicle console or similar structure. The cylindrical shape of the cup holder adaptor 1, as well as the inward-projecting first slats, can provide a stable grip on the can 22. The second slats, which project outward from the base body, are also visible and can engage with the inner surface of the cup holder 28, ensuring that the cup holder adaptor 1 remains securely in place within the larger assembly. In Figure 4 the cup holder adaptor is not yet fully inserted into the cup holder 28. The cup holder 28 could also be named as holding device.

Figure 5 is the same isometric view of Figure 4 but fully inserted/assembled within a cup holder and a can within the cup holder adaptor. The can 22 is shown inserted into the cup holder adaptor 1, which is placed within the cup holder 28. This view highlights the alignment and interaction between the cup holder adaptor 1 and the cup holder 28. The second slats, projecting outward from the base body of the cup holder adaptor 1, can be seen making contact with the inner walls of the cup holder 28, providing additional stability and preventing or mitigating lateral or longitudinal movement. The first slats, although not directly visible in this view, are implied to be providing the necessary inward pressure to hold the can 22 securely.

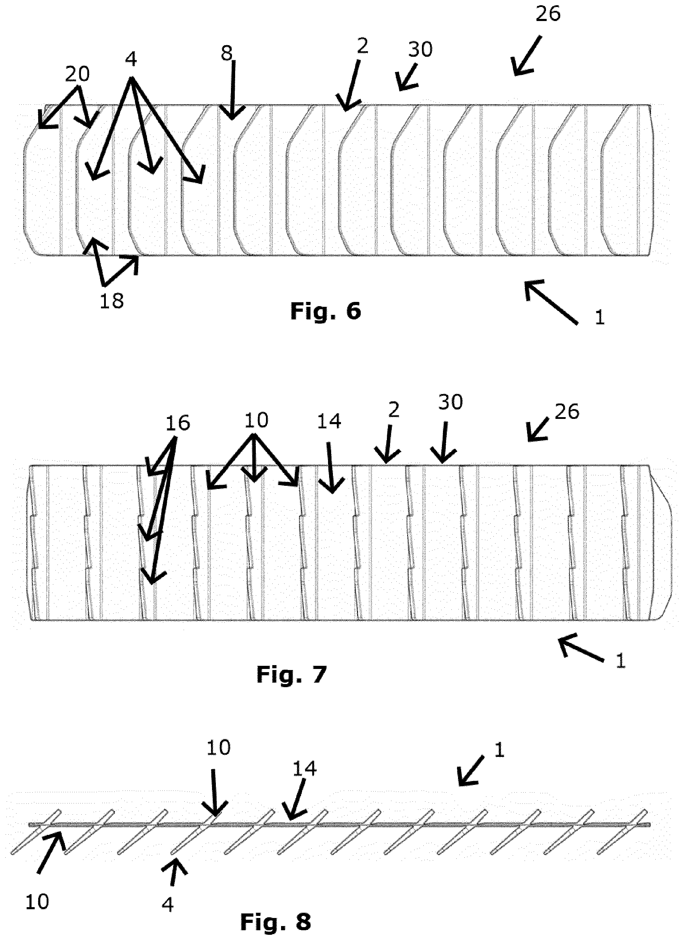

Figure 6 illustrates a side view of another embodiment, where the cup holder adaptor can also be converted into an unused form. The cup holder adaptor 1 in its unused form 26 in which the base body 2 is in an elongated flat shape 30. First slats 4 are connected to the base body 2 and project inward from the inside 8 of the base body 2. The first slats 4 have first ends 18 and second ends 20, both of which are inclined or rounded. The base body 2 is flexible, allowing it to be rotated into a cylindrical shape when in use.

Figure 7 shows another side view of the cup holder adaptor 1 in its unused form 26, highlighting the second slats 10. The second slats 10 project outward from the outside 14 of the base body 2. These second slats 10 feature tooth-like projections 16 along their entire length. The base body 2 remains in an elongated flat shape 30, similar to that shown in Figure 6.

Figure 8 provides a top view of the cup holder adaptor 1 in its unused form 26. This view illustrates the arrangement of both the first slats 4 and the second slats 10. The first slats 4 project inward from the inside 8 of the base body 2, while the second slats 10 project outward from the outside 14 of the base body 2. The alignment and spacing of the slats are clearly visible, showing how they are connected to the base body 2.

In summary, Figures 6, 7, and 8 collectively depict the structural details of the cup holder adaptor 1 in its unused form 26. The base body 2 is shown in an elongated flat shape 30 with first slats 4 projecting inward and second slats 10 projecting outward. The first slats 4 have inclined or rounded ends 18 and 20, and the second slats 10 feature tooth-like projections 16. These figures illustrate the flexibility and arrangement of the slats, which allow the base body 2 to be rotated into a cylindrical shape when in use.

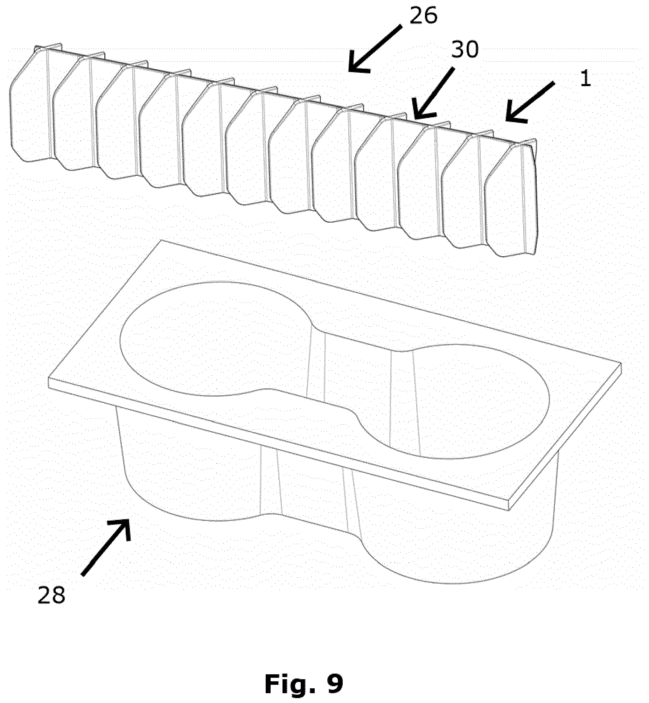

Figure 9 illustrates a cup holder adaptor assembly and its components in an unused form. The cup holder adaptor 1 is depicted in an elongated flat shape 30, indicating its second, unused form 26. This flat configuration allows for compact storage and ease of transport. The cup holder adaptor 1 is designed to be flexible, enabling it to be rolled into a cylindrical shape when in use.

The figure shows the cup holder adaptor 1 in its flat, unused form 26, which comprises a series of slats arranged longitudinally. These slats are connected to the base body 2, which is not explicitly labeled in this figure but is integral to the structure. The flexibility of the slats and the base body allows the cup holder adaptor to be rolled from the flat shape 30 into a cylindrical shape 24 when needed.

Additionally, the figure includes a second component, labeled as 28, which appears to be a dual cup holder. This component is used for illustrative purposes and is indicative of a 'known' cup holder component found in most vehicles/boats/planes/furniture etc. This component is designed to accommodate two cylindrical cup holders, providing a stable platform for holding multiple cans or cups. The dual cup holder 28 is likely intended for use in vehicles or other settings where multiple beverages need to be securely held.

The transformation from the flat, unused form 26 to the cylindrical, used form 24 involves rolling the flexible base body 2 and the integrated slats. In the cylindrical shape, the slats project inward to securely hold a can or cup.

In summary, Figure 9 provides a detailed view of the cup holder adaptor 1 in its flat, unused form 26, highlighting its flexibility and the potential for transformation into a cylindrical shape. It also shows the dual cup holder component28, in which the cup holder adaptor could be inserted.

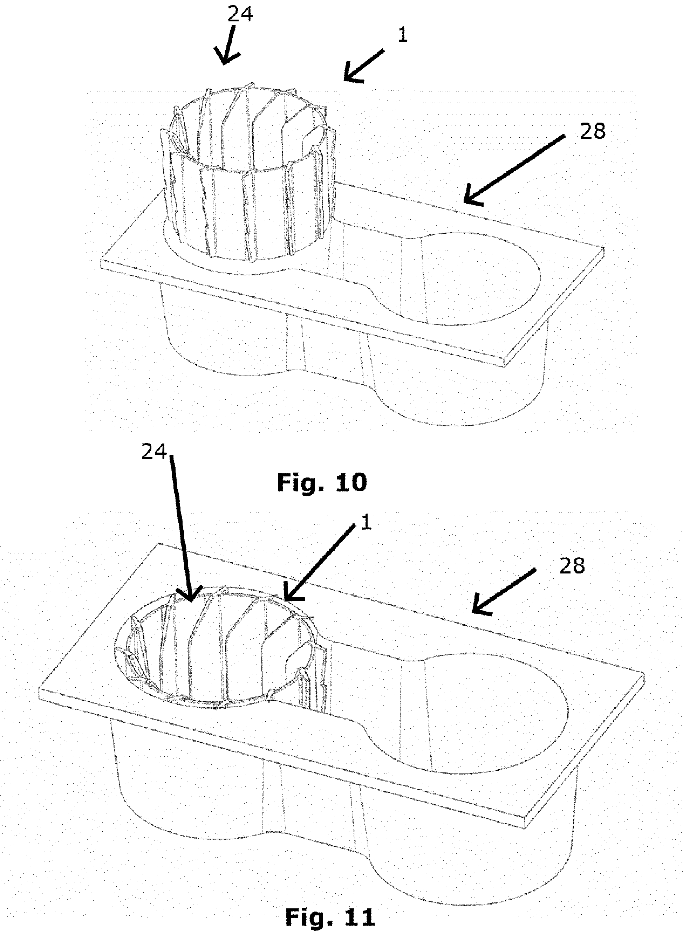

Figures 10 and 11 illustrate an embodiment of a cup holder adaptor designed to hold a can. The cup holder adaptor 1 comprises a base body 2 and slats projecting from this base body.

In Figure 10, the cup holder adaptor 1 is shown in its used form 24, where the base body 2 adopts a cylindrical shape. The cylindrical base body 2 is designed to fit into a cup holder 28, which is part of a larger structure, possibly a vehicle console or a similar fixture. The cylindrical shape of the base body 2 allows it to securely hold a can or similar cylindrical object.

The first slats 4 are connected longitudinally to the cylindrical base body 2 and project inward into the cylinder. These first slats 4 are flexible in the direction of the base body 2, allowing them to adapt to the shape and size of the can being held. The flexibility of the first slats 4 ensures a snug fit around the can, providing stability and preventing the can from moving or tipping over.

Additionally, second slats 10 are provided, which project from the outside of the cylindrical base body 2. These second slats 10 are also flexible in the direction of the base body 2. The second slats 10 may serve to enhance the structural integrity of the cup holder adaptor 1 and provide additional grip when the cup holder adaptor 1 is inserted into a cup holder 28.

Figure 11 shows the cup holder adaptor 1 inserted into a cup holder 28. In this configuration, the cylindrical base body 2 of the cup holder adaptor 1 fits securely within the opening of the cup holder 28. The first slats 4, which project inward, are visible and appear to be angled or inclined to ensure a firm grip on the can. The second slats 10, projecting outward, may also be visible and contribute to the secure fit within the cup holder 28.

The embodiment depicted in Figures 10 and 11 demonstrates the versatility and adaptability of the cup holder adaptor 1. The cylindrical shape of the base body 2 in the used form 24, combined with the flexible first and second slats 4 and 10, allows the cup holder adaptor 1 to securely hold a can while being compatible with existing cup holder structures, such as the one labeled 28. This design ensures that the cup holder adaptor 1 can be easily integrated into various environments, providing a reliable and stable solution for holding cans.

## Claims

1. Cup holder adaptor (1) for holding a can or a bottle or another cylindrically shaped object (22), the cup holder adaptor (1) comprising a base body (2) and slats projecting from this base body (2),
**characterized in that**,
the base body (2) in a used form (24) has a cylindrical shape and the first slats (4) are connected in the longitudinal direction (6) to the cylindrical base body and project inwards into the cylinder, wherein the first slats (4) are flexible in the direction of the base body (2), and **in that** second slats (10) are provided which project from the outside (14) of the base body (2) and are also flexible in the direction of the base body (2).

2. Cup holder adaptor (1) according to claim 1, **characterized in that** the base body (2) has an elongated flat shape (30) in a second, unused form (26), the base body (2) being flexible such that it is rollable into a cylindrical shape in the first, used form (24), the first slats (4) being arranged inside the cylindrical shape and projecting from the base body (2).

3. Cup holder adaptor (1) according to claim 2, **characterized in that** the ends of the base body (2) overlaps in the first, used form (24).

4. Cup holder adaptor (1) according to one of the preceding claims, **characterized in that** in the used form (24) and the second slats (10) are connected in the longitudinal direction (6) to the cylindrical base body.

5. Cup holder adaptor (1) according to one of the preceding claims, **characterized in that** the first slats (4) protrude at an angle of less than 90° from the inside (8) of the base body (2).

6. Cup holder adaptor (1) according to one of the preceding claims, **characterized in that** the second slats (10), which protrude on the outside, also protrude at an angle of less than 90° from the outside (14) of the base body (2).

7. Cup holder adaptor (1) according to one of the preceding claims, **characterized in that** the first slats (4) are longer than the second slats (10).

8. Cup holder adaptor (1) according to one of the preceding claims, **characterized in that** the cylindrical shape of the cup holder adaptor (1) can be inserted into a cup holder (28).

9. Cup holder adaptor (1) according to one of the preceding claims, **characterized in that** the second slats (10) comprise tooth-like projections (16) over their entire length.

10. Cup holder adaptor (1) according to one of the preceding claims, **characterized in that** the first slats (4) are inclined, preferably rounded, also at the respective second ends (20).

11. Cup holder adaptor (1) according to claim 10, **characterized in that** the first slats (4) are inclined, preferably rounded, at least at the respective first ends (18).
